Europäisches Patentamt

European Patent Office

Office européen des brevets

(19)

(11) EP 0 930 556 A2

(12) EUROPEAN PATENT APPLICATION

(43) Date of publication:
21.07.1999 Bulletin 1999/29

(51) Int Cl.⁶: G06F 1/00

(21) Application number: 99300165.0

(22) Date of filing: 11.01.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **12.01.1998 JP 403098**

(71) Applicant: **SONY CORPORATION Tokyo 141 (JP)**

(72) Inventors:
• **Komuro, Teruyoshi,
c/o Intellectual Property Dept
Shinagawa-ku, Tokyo 141 (JP)**

• **Osawa, Yoshitomo,
c/o Intellectual Property Dept
Shinagawa-ku, Tokyo 141 (JP)**
• **Asano, Tomoyuki, c/o Intellectual Property Dept
Shinagawa-ku, Tokyo 141 (JP)**

(74) Representative: **Cotter, Ivan John et al
D. YOUNG & CO.
21 New Fetter Lane
London EC4A 1DA (GB)**

(54) **Information processing apparatus, methods and systems and providing media**

(57) Illegal copying of data by an illegal apparatus is prevented. A management centre (110) produces a revocation list in which device_IDs of apparatus from which information to be kept secret is exposed are listed, and supplies the revocation list to a data broadcasting reception apparatus (130) via a satellite (120). When the revocation list is provided from the management centre (110), the data broadcasting reception apparatus (130) compares the device_IDs listed in the received revocation list with device_IDs stored in a connected device_ID table (CDT). If the connected device_ID table includes a device_ID which coincides with one of the device_IDs listed in the revocation list, then the data broadcasting reception apparatus (130) reports the device_ID to apparatus to which the data broadcasting reception apparatus is connected over an IEEE1394 bus.

FIG. 11

EP 0 930 556 A2

## Description

This invention relates to information processing apparatus and methods, information processing systems, and providing media. A preferred form of implementation of the invention recorded below provides an information processing apparatus and method, an information processing system and a providing medium by which illegal copying of data by an illegal apparatus can be prevented.

In recent years, system have been proposed wherein electronic apparatus such as AV apparatus and a personal computer are connected to each other over a transmission line such as, for example, an IEEE 1394 bus (hereinafter referred to simply as 1394 bus) so that data may be communicated between them.

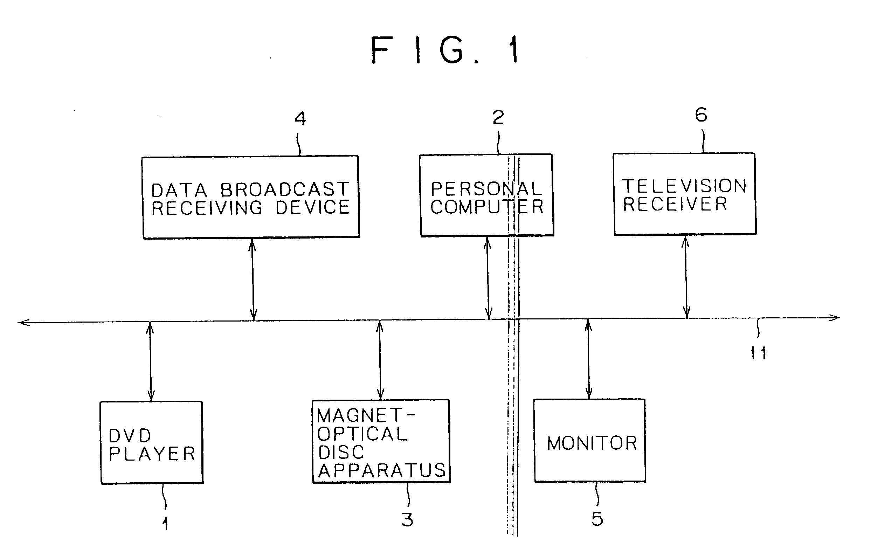

FIG. 1 shows an example of a construction representing one of such information processing systems as described above. It is to be noted that, in the present specification, the term "system" is used to represent a general apparatus composed of a plurality of apparatus. Referring to FIG. 1, the information processing system shown includes a digital video disc (DVD) player 1, a personal computer 2, a magneto-optical disc apparatus 3, a data broadcast reception apparatus 4, a monitor 5 and a television receiver 6 connected to one another by a 1394 bus 11.

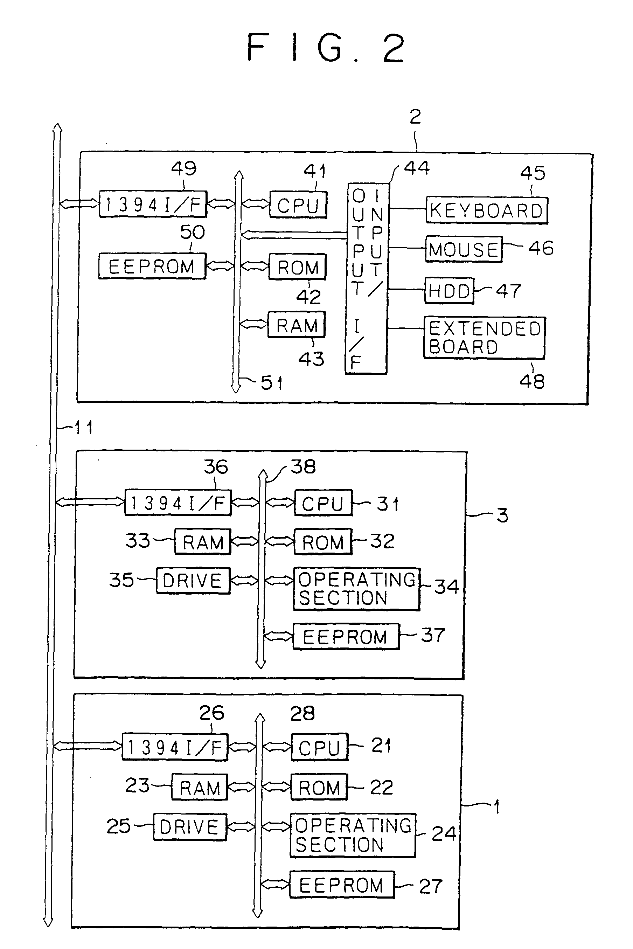

FIG. 2 shows an example of more detailed internal constructions of the DVD player 1, personal computer 2 and magneto-optical disc apparatus 3 of the information processing system shown in FIG. 1. Referring to FIG. 2, the DVD player 1 is connected to the 1394 bus 11 by a 1394 interface (I/F) 26. A CPU 21 executes various processes in accordance with a program stored in a ROM 22, and a RAM 23 suitably stores data and/or a program necessary for the CPU 21 to execute various processes. An operating section 24 includes buttons, switches, a remote controller and so forth and outputs, when it is operated by a user, a signal corresponding to the operation. A drive 25 drives a DVD (disc) not shown to reproduce data recorded on the DVD. An electrically erasable programmable ROM (EEPROM) 27 stores information which must be stored also after powering off the apparatus. An internal bus 28 connects the components of the DVD player 1 to one another.

The magneto-optical disc apparatus 3 includes a CPU 31, a ROM 32, a RAM 33, a operating section 34, a drive 35, a 1394 interface 36, an EEPROM 37 and an internal bus 38. The components 31 to 38 have functions similar to those of the components 21 to 28 of the DVD player 1 described above, respectively, and overlapping description of them is omitted here to avoid redundancy. However, the drive 35 drives a magneto-optical disc not shown to record or reproduce data onto or from the magneto-optical disc.

The personal computer 2 is connected to the 1394 bus 11 by a 1394 interface 49. A CPU 41 executes various processes in accordance with a program stored in a ROM 42. A RAM 43 suitably stores data and/or a program necessary for the CPU 41 to execute various processes. An input/output interface 44 has a keyboard 45 and a mouse 46 connected thereto so that it may output signals inputted by them to the CPU 41. Also a hard disk unit (HDD) 47 is connected to the input/output interface 44 such that the CPU 41 can record or reproduce data or a program onto or from the hard disk unit 47. Further, an extended board 48 can be suitably mounted onto the input/output interface 44 so that a necessary function may be added. An EEPROM 50 stores information which is required to be stored even after powering off the apparatus. An internal bus 51 formed from, for example, a peripheral component interconnect (PCI) or a local bus interconnects the components of the personal computer 2.

It is to be noted that the internal bus 51 is open to users. Consequently, a user can suitably connect a suitable board to the extended board 48 or can produce and install a suitable software program into the CPU 41 so that data transmitted from the internal bus 51 may be suitably received by the CPU 41.

On the other hand, in consumer electronics (CE) apparatus such as the DVD player 1 and the magneto-optical disc apparatus 3, internal buses such as the internal bus 28 and the internal bus 38 are not open to users. Consequently, a user cannot acquire data transmitted over such internal buses without special modification to them.

In the information processing system having the construction described above, when a user tries, for example, to enjoy a movie recorded on a DVD using a display unit such as the monitor 5 or the television receiver 6, the DVD player 1 transmits movie data read from the DVD (disc) to the display unit over the 1394 bus 11, and the display unit receives and displays the movie data.

However, if the movie data in this instance are transmitted through the 1394 bus 11, then there is a possibility that an illegal user may receive and illegally copy the movie data. Therefore, the apparatus on the transmission side (such apparatus will be hereinafter referred to as source) enciphers the data to be transmitted and transmits the enciphered data, and the apparatus on the reception side (such apparatus will be hereinafter referred to as sink) receives and deciphers the enciphered data using a key. In this instance, the transmission side apparatus executes, in order to discriminate whether or not the other party apparatus is a legal apparatus, authentication processing with the other party apparatus before it transmits the data.

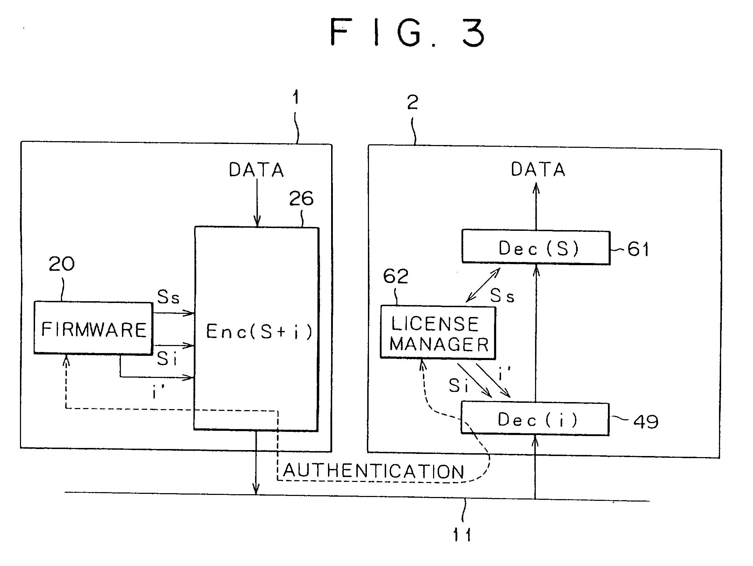

In the following, authentication processing performed between a source and a sink is described. This authentication processing is performed, as shown in FIG. 3, between firmware 20 as one of software programs stored in advance, for example, in the ROM 22 of the DVD player 1 and a license manager 62 as one of software programs stored, for example, in the ROM 42 of the personal computer 2 and processed by the CPU 41.

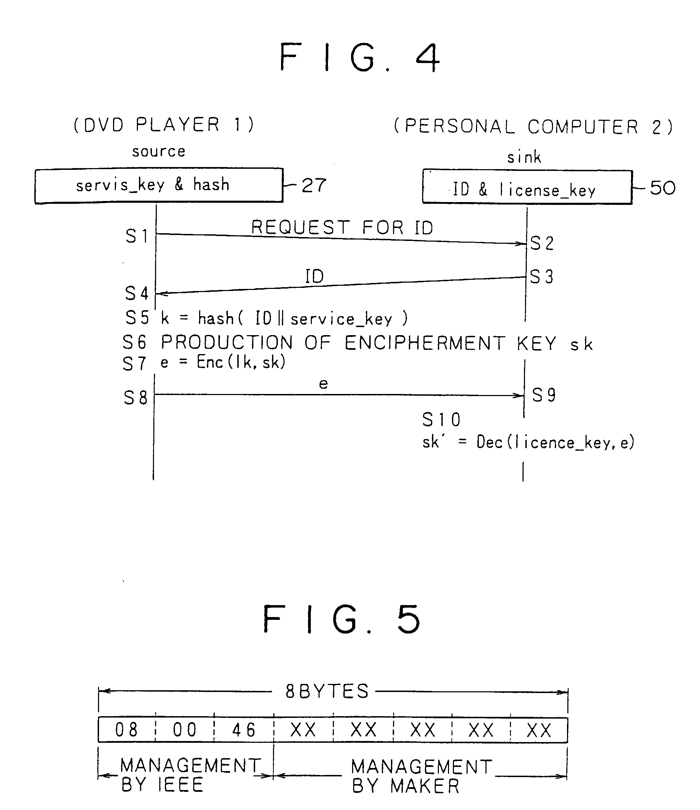

FIG. 4 illustrates a procedure of the authentication performed between the source (DVD player 1) and the sink (personal computer 2). A service key (service_key) and a function (hash) are stored in advance in the EEPROM 27 of the DVD player 1. They have been given to a user of the DVD player 1 from the proprietor of the copyright of data (movie data) to be transmitted, and each user keeps them in the EEPROM 27 in secrecy.

The service key is given for each piece of information to be provided by the proprietor of the copyright and is common to the system which includes the 1394 bus 11. The hash function is a function to be used to output data of a fixed length such as 64 bits or 128 bits in response to an input of an arbitrary length, and is a function with which, when y (= hash(x)) is given, it is difficult to determine x and also it is difficult to determine a set of x1 and x2 which satisfy hash(x1) = hash(x2). As representative ones of one-directional hash functions, the MD5 and the SHA are known. The one-directional hash function is explained in detail in Bruce Schneier, "Applied Cryptography (Second Edition), Wiley".

Meanwhile, for example, the personal computer 2 as a sink keeps secret in the EEPROM 50 thereof an identification number unique to the personal computer 2 itself (device_ID: hereinafter referred to suitably and briefly as ID) and a license key (license_key) given thereto by the proprietor of the copyright. The license key is a value obtained by applying a hash function to data (ID II service_key) of n + m bits obtained by connecting the ID of n bits and the service key of m bits. In other words, the license key is represented by the following expression:

$$license\_key = hash(ID \text{ II } service\_key)$$

For the ID, for example, the node_unique_ID prescribed in the standards of the 1394 bus 11 can be used. The node_unique_ID is composed of 8 bytes (64 bits) as seen in FIG. 5, and the first 3 bytes are managed by the IEEE and supplied from the IEEE to each maker of electronic apparatus. The lower order 5 bytes can be provided by each maker to each apparatus provided by the maker itself to users. Each maker may allocate, for example, consecutive numbers serially to the lower order 5 bytes in a one-by-one corresponding relationship for each product, and may, when the numbers for the 5 bytes are all used, be supplied with another node_unique_ID having a different number at the higher order 3 bytes and allocate a number per one apparatus with the lower order 5 bytes of the node_unique_ID. Accordingly, the node_unique_ID is different among different apparatus irrespective of makers and is unique to each apparatus.

Referring to FIG. 4, first in step S1, the firmware 20 of the DVD player 1 controls the 1394 interface 26 to request the personal computer 2 for an ID over the 1394 bus 11. In step S2, the license manager 62 of the personal computer 2 receives the request for an ID. In particular, the 1394 interface 49 receives the signal of the request for an ID transmitted thereto from the DVD player 1 over the 1394 bus 11 and outputs it to the CPU 41. Upon reception of the request for an ID, the license manager 62 of the CPU 41 reads out the ID stored in the EEPROM 50 and transmits it to the DVD player 1 through the 1394 interface 49 over the 1394 bus 11 in step S3.

In the DVD player 1, the 1394 interface 26 receives the ID transmitted thereto from the personal computer 2 and supplies the ID to the firmware 20, which operates with the CPU 21, in step S4.

The firmware 20 connects, in step S5, the ID received from the personal computer 2 and the service key stored in the EEPROM 27 to produce connection data (ID II service_key) and applies a hash function to the connection data as given by the following expression

$$lk = hash(ID \text{ II } service\_key)$$

to produce a key lk.

Then in step S6, the firmware 20 produces an encipherment key sk. The encipherment key sk is used as a session key commonly by the DVD player 1 and the personal computer 2.

Then in step S7, the firmware 20 enciphers the encipherment key sk produced in step S6 using the key lk produced in step S5 as a key to obtain enciphered data (an enciphered key) e. In particular, the firmware 20 operates the following expression

$$e = Enc(lk, sk)$$

where Enc(A, B) signifies enciphering data B using a key A in the common key cryptographic system.

Then in step S8, the firmware 20 transmits the enciphered data e produced in step S7 to the personal computer 2. In particular, the enciphered data e is transmitted from the 1394 interface 26 of the DVD player 1 to the personal computer 2 over the 1394 bus 11. In the personal computer 2, the enciphered data e is received by the 1394 interface 49 in step S9. The license manager 62 deciphers the enciphered data e received in this manner using the license key stored in the EEPROM 50 as a key in accordance with the following expression to produce a decipherment key sk'

$$sk' = Dec(license\_key, e)$$

where Dec(A, B) signifies deciphering data B using a key A in the common key cryptographic system.

It is to be noted that, as an algorithm for encipherment for the common key cryptographic system, the DES (Data Encryption Standard of the United States) is known. Also the common key cryptographic system is explained in detail in Applied Cryptography (Second Edition) mentioned hereinabove.

In the DVD player 1, the key lk produced in step S5 has an equal value to the license_key stored in the EEPROM 50 of the personal computer 2. In other words, the following expression is satisfied:

$$lk = license\_key$$

Accordingly, the key sk' obtained by the decipherment in step S10 in the personal computer 2 has an equal value to the encipherment key sk produced in step S6 in the DVD player 1. In other words, the following expression is satisfied:

$$sk' = sk$$

In this manner, the DVD player 1 (source) and the personal computer 2 (sink) can commonly have a same key sk or sk'. Consequently, the key sk may be used as it is as an encipherment key, or each of the DVD player 1 and the personal computer 2 may produce a pseudo random number based on the key sk and use the pseudo random number as an encipherment key.

Since the license key is produced based on the ID unique to the apparatus and a service key corresponding to information to be provided as described above, any other apparatus cannot produce the key sk or sk'. Further, since any apparatus which is not authorized by the proprietor of the copyright does not have a license key, it cannot produce the key sk or sk'. Accordingly, when the DVD player 1 thereafter enciphers reproduction data using the encipherment key sk and transmits the enciphered data to the personal computer 2, if the personal computer 2 has a license key acquired legally, then since it has the decipherment key sk', it can decipher the enciphered reproduction data transmitted thereto from the DVD player 1. However, where the personal computer 2 is not a legal apparatus, since it does not have the decipherment key sk', it cannot decipher the enciphered reproduction data transmitted thereto. In other words, since only a legal apparatus can produce the common key sk or sk', this signifies that authentication has been performed successfully as a result.

Even if a license key of the personal computer 2 is stolen, since the ID is different among different personal computers, it is impossible for any other apparatus to use the license key to decipher enciphered data transmitted thereto from the DVD player 1. Consequently, the safety is improved.

Here, such a case wherein an illegal user comes to know both of the enciphered data e and the encipherment key sk by some reason is considered. In this instance, since the enciphered data e is a ciphertext obtained by enciphering the cleartext sk with the key lk, where the encipherment algorithm is publicly open, an illegal user may possibly obtain the correct key lk by trying to detect the key lk as a round robin.

In order to make an attack of the type mentioned by an illegal user more difficult, part or all of the encipherment algorithm can be kept secret without publicly opening the same.

Similarly, in order to make more difficult an attack of checking the service_key in a round robin from the license_key, part or all of the hash function may be kept secret without publicly opening the same.

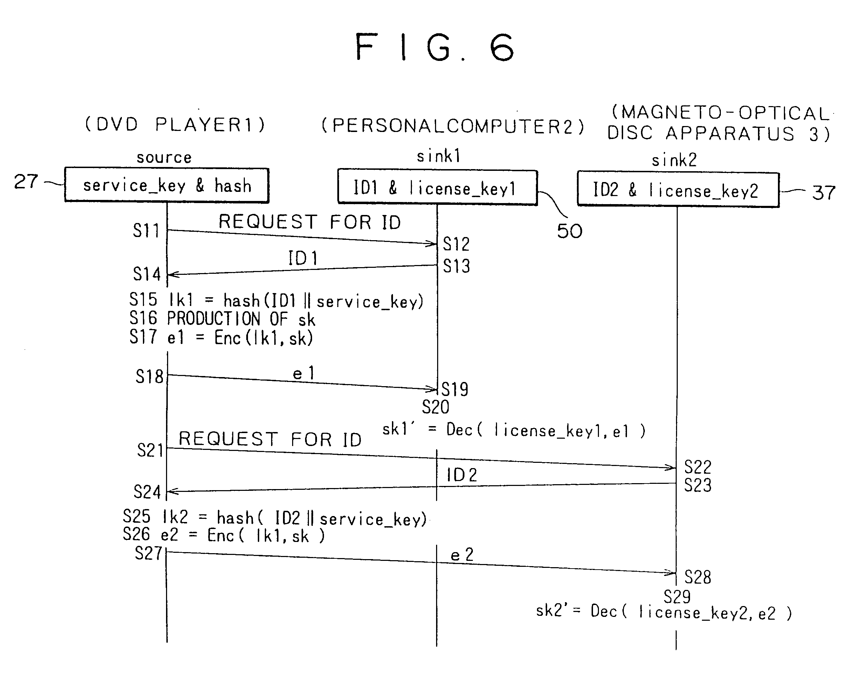

FIG. 6 illustrates an example of processing where not only the personal computer 2 but also the magneto-optical disc apparatus 3 function as a sink with respect to a source (DVD player 1).

In this instance, in the EEPROM 50 of the personal computer 2 serving as the sink 1, an ID1 as the ID and a license_key1 as the license key are stored, and in the EEPROM 37 of the magneto-optical disc apparatus 3 as the sink 2, an ID2 as the ID and a license_key2 as the license key are stored.

Since processing in steps S11 to S20 which is performed by and between the DVD player 1 (source) and the personal computer 2 (sink 1) is similar to the processing in steps S1 to S10 described hereinabove with reference to FIG. 4, and accordingly, overlapping description of the same is omitted here to avoid redundancy.

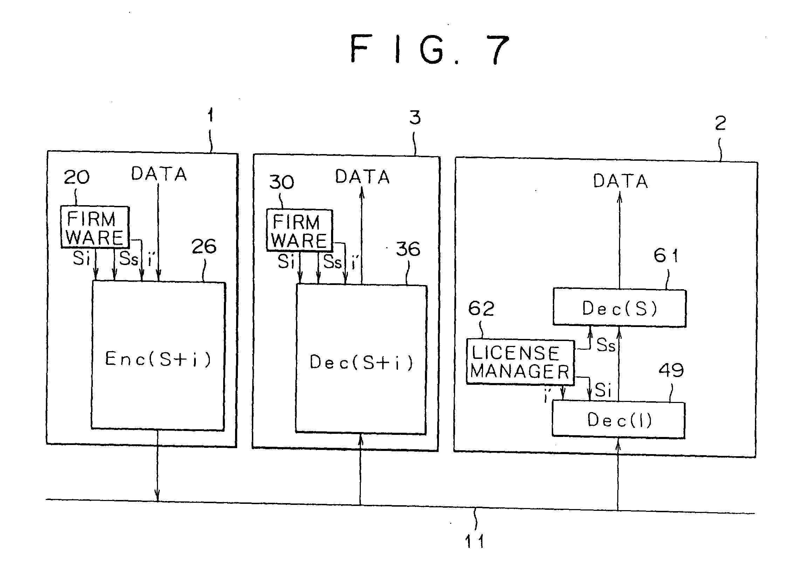

Thus, the DVD player 1 performs authentication processing with the personal computer 2 in such a manner as described hereinabove. Then, in step S21, the DVD player 1 requests the magneto-optical disc apparatus 3 for an ID. In the magneto-optical disc apparatus 3, the ID request signal is received through the 1394 interface 36 in step S22, and a firmware 30 (FIG. 7) reads out the ID (ID2) stored in the EEPROM 37 and transmits it from the 1394 interface 36 to the DVD player 1 over the 1394 bus 11 in step S23. The firmware 20 of the DVD player 1 receives the ID2 at the 1394 interface 26 in step S24, and then produces, in step S25, a key lk2 in accordance with the following expression:

$$lk2 = hash(ID2 \, II \, service\_key)$$

Further, in step S26, the firmware 20 calculates the following expression

$$e2 = Enc(lk2, sk)$$

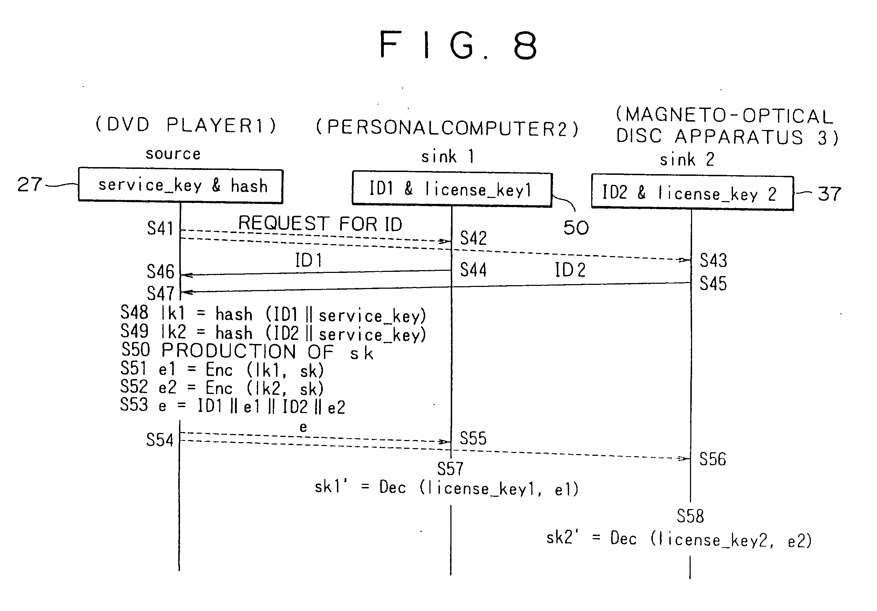

to encipher the key sk produced in step S16 using the key lk2 produced in step S25 to produce enciphered data e2.
Then in step S27, the firmware 20 transmits the enciphered data e2 from the 1394 interface 26 to the magneto-optical disc apparatus 3 over the 1394 bus 11.
The magneto-optical disc apparatus 3 receives the enciphered data e2 through the 1394 interface 36 in step 528 and then calculates the following expression

$$sk2' = Dec(license\_key2, e2)$$

to produce a decipherment key sk2' in step S29.
The decipherment keys sk1' and sk2' are obtained by the personal computer 2 and the magneto-optical disc apparatus 3 in such a manner as described above, respectively. The values of the decipherment keys sk1' and sk2' have an equal value to the encipherment key sk of the DVD player 1.
While, in the processing described hereinabove with reference to FIG. 6, the DVD player 1 requests the personal computer 2 and the magneto-optical disc apparatus 3 individually for an ID and processes received IDs, where it is possible to request for an ID by multi-address calling, such processing as illustrated in FIG. 8 can be performed.
In particular, referring to FIG. 8, the DVD player 1 serving as a source requests all sinks (in the present example, the personal computer 2 and the magneto-optical disc apparatus 3) for an ID by multi-address calling. The personal computer 2 and the magneto-optical disc apparatus 3 receive the ID transfer request signal in steps S42 and S43, respectively, and read out the ID1 and the ID2 stored in the EEPROM 50 and the EEPROM 37 and transfer them to the DVD player 1 in steps S44 and S45, respectively. The DVD player 1 receives the IDs in steps S46 and S47.
Then in step S48, the DVD player 1 produces an encipherment key lk1 in accordance with the following expression:

$$lk1 = hash(ID1 \, II \, service\_key)$$

Further, in step S49, the DVD player 1 produces another encipherment key lk2 in accordance with the following description:

$$lk2 = hash(ID2 \, II \, service\_key)$$

The DVD player 1 further produces an encipherment key sk in step S50 and enciphers the encipherment key sk using the key lkl as a key in accordance with the following expression:

$$e1 = Enc(lk1, sk)$$

Further in step S52, the DVD player 1 enciphers the encipherment key sk using the key lk2 as a key in accordance with the following expression:

$$e2 = Enc(lk2, sk)$$

Then, in step S53, the DVD player 1 connects the ID1, data e1, ID2 and data e2 as given by

$$e = ID1 \text{ II } e1 \text{ II } ID2 \text{ II } e2$$

to produce enciphered data e.

Further in step S54, the DVD player 1 transmits the enciphered data e produced in such a manner as described above to the personal computer 2 and the magneto-optical disc apparatus 3 by multi-address calling.

The enciphered data e is received by the personal computer 2 and the magneto-optical disc apparatus 3 in steps S55 and S56, respectively. Then, the personal computer 2 and the magneto-optical disc apparatus 3 perform, in steps S57 and S58, calculation in accordance with the following expression

$$sk1' = Dec(license\_key1, e1)$$

$$sk2' = Dec(license\_key2, e2)$$

to produce decipherment keys sk1' and sk2' in steps S57 and S58, respectively.

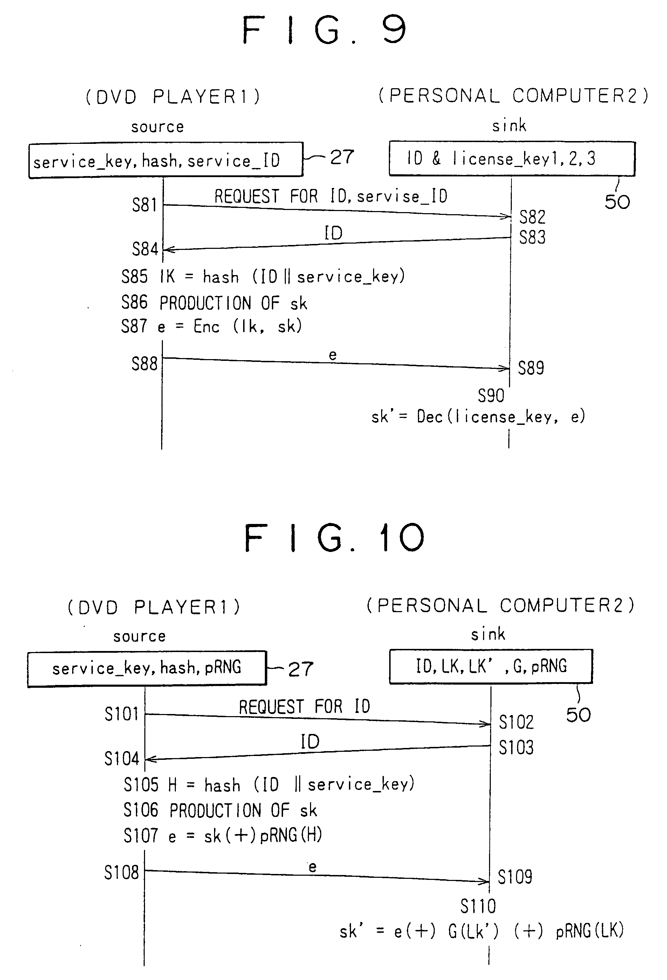

FIG. 9 illustrates an example of processing where a sink can be given a plurality of services (decipherment of various kinds of information). In particular, in this instance, for example, the personal computer 2 serving as a sink has a plurality of license keys (license_key 1, license_key 2, license_key 3 and so forth) stored in the EEPROM 50. The DVD player 1 serving as a source has a plurality of service keys (service_key 1, service_key 2, service_key 3 and so forth) stored in the EEPROM 27. In this instance, when the DVD player 1 requests the personal computer 2 serving as a sink for an ID in step S81, it transfers a service_ID for identifying information (a service) to be transferred subsequently. The personal computer 2 receives the service_ID in step S82, and selects one of the plurality of license keys stored in the EEPROM 50 which corresponds to the service_ID and performs decipherment processing using the selected license key in step S90. The remaining operation is similar to that described hereinabove with reference to FIG. 3.

FIG. 10 illustrates a yet further example of processing. Referring to FIG. 10, in the example illustrated, the DVD player 1 serving as a source has a service_key, a hash function and a pseudo random number generation function (pseudo random generator) pRNG stored in the EEPROM 27 thereof. They are supplied from the proprietor of the copyright and kept secret. Further, in the EEPROM 50 of the personal computer 2 serving as a sink, an ID, values LK and LK', a function G (Confusion Function) and a pseudo random number generation function pRNG supplied thereto from the proprietor of the copyright are stored.

The value LK is a unique random number produced by the proprietor of the copyright, and the value LK' is produced so as to satisfy the following expressions:

$$LK' = G^{-1}(R)$$

$$R = pRNG(H) (+) pRNG(LK)$$

$$H = hash(ID \text{ II } service\_key)$$

where $G^{-1}$ (^ signifies a power number) signifies an inverse function to G. $G^{-1}$ has a characteristic that, if a predetermined rule is known, then it can be calculated simply, but if the predetermined rule is not known, then it is difficult to calculate. For this function, a function which is used for a public-key cryptography can be utilized.

The pseudo random number generation function may alternatively be provided as hardware.

First, the firmware 20 of the DVD player 1 requests the license manager 62 of the personal computer 2 for an ID in step S101. The license manager 62 of the personal computer 2 receives the ID request signal in step S102, and reads out the ID stored in the EEPROM 50 and transmits it to the DVD player 1 in step S103. The firmware 20 of the DVD player 1 receives the ID in step S104 and calculates, in step S105, the following expression:

$$H = hash(ID \text{ II } service\_key)$$

Further, the firmware 20 produces a key sk in step S106 and calculates, in step S107, the following expression:

$$e = sk \: (+) \: pRNG(H)$$

where A (+) B signifies operation of exclusive ORing (Bitwise XOR).

In other words, the firmware 20 operates exclusive ORing for each bit between the result pRNG(H) obtained by inputting H determined in step S105 into the pseudo random number generation function pRNG and the key sk produced in step S106 to encipher the key SK.

Then in step S108, the firmware 20 transmits the enciphered data e to the personal computer 2.

The personal computer 2 receives the enciphered data e in step S109 and calculates, in step S110, the following expression:

$$sk' = e \: (+) \: G(LK') \: (+) \: pRNG(LK)$$

In particular, the personal computer 2 operates exclusive ORing of the enciphered data e transmitted thereto from the DVD player 1, a value G(LK') obtained by applying the value LK' stored in the EEPROM 50 to the function G also stored in the EEPROM 50 and a result pRNG(LK) obtained by applying the value LK' stored in the EEPROM 50 to the pseudo random number generation function pRNG also stored in the EEPROM 50 to obtain a key sk'.

Here, the encipherment key sk and the decipherment key sk' have a relationship of sk = sk' as seen from the following expression:

$$
\begin{aligned}
sk' &= e \: (+) \: G(LK') \: (+) \: pRNG(LK) \\
&= sk \: (+) \: pRNG(H) \: (+) \: R \: (+) \: pRNG(LK) \\
&= sk \: (+) \: pRNG(H) \: (+) \: pRNG(H) \: (+) \: pRNG(LK) \: (+) \: pRNG(LK) \\
&= sk
\end{aligned}
$$

The DVD player 1 serving as a source and the personal computer 2 serving as a sink can share the same key sk or sk' in this manner. Since only the proprietor of the copyright can make the values LK and LK', even if a source tries to make the values LK and LK', it cannot make them successfully. Consequently, a high degree of safety can be achieved.

While, in the foregoing description, authentication is performed between a source and a sink, for example, the personal computer 2 can be used normally with an arbitrary application program loaded therein. Then, for the application program, an application program produced illegally may possibly be used. Accordingly, for each application program, it is necessary to discriminate whether or not the application program has been authorized by the proprietor of the copyright. Therefore, authentication processing may be performed between each application section 61 and the license manager 62 as seen in FIG. 7. In this instance, the license manager 62 serves as a source and the application section 61 serves as a sink.

Now, operation of transferring, after authentication is performed (after sharing of an encipherment key is performed) in such a manner as described above, enciphered data from a source to a sink using the encipherment key so that the sink deciphers the enciphered data is described.

Referring to FIG. 7, in an apparatus whose internal functions are not open to common users like the DVD player 1 or the magneto-optical disc apparatus 3, processing for encipherment and decipherment of data communicated over the 1394 bus 11 is performed by a 1394 interface such as the 1394 interface 26 or the 1394 interface 36. While a session key S and a time-varying key i are used for the encipherment and the decipherment, the session key S and the time-varying key i (more precisely, a key i' for producing the time-varying key i) are supplied from the firmware 20 or the firmware 30 to the 1394 interface 26 or the 1394 interface 36. The session key S is composed of an initial value key Ss used as an initial value and a disturbance key Si which is used to disturb the time-varying key i. The initial value key Ss and the disturbance key Si can be formed from predetermined bit numbers of higher order bits and lower order bits of the encipherment key sk (= sk') produced in the authentication described hereinabove. The session key S is suitably updated for each session (for example, for information of each one movie or for each one reproduction operation). On the other hand, the disturbance key Si and the time-varying key i produced from the key i' are updated frequently in one session, and, for example, time information at a predetermined timing may be used for the time-varying key i.

Now, it is assumed that video data reproduced by and outputted from the DVD player 1 serving as a source are transmitted over the 1394 bus 11 to the magneto-optical disc apparatus 3 and the personal computer 2 so that they are deciphered individually by them. In this instance, in the DVD player 1, the 1394 interface 26 performs encipherment processing using the session key S and the time-varying key i. In the magneto-optical disc apparatus 3, the 1394 interface 36 performs decipherment processing using the session key S and the time-varying key i.

Meanwhile, in the personal computer 2, the license manager 62 supplies the initial value key Ss of the session key S to the application section 61 and supplies the disturbance key Si and the time-varying key i (more precisely, the key i' for producing the time-varying key i) to the 1394 interface 49 (link part). Then, the 1394 interface 49 produces the time-varying key i from the disturbance key Si and the key i' and deciphers the video data using the time-varying key i, and the deciphered data is further deciphered using the session key S (more precisely, the initial value key Ss) by the application section 61.

In this manner, in the personal computer 2, since the internal bus 51 is open to users, only decipherment in the first stage is performed by the 1394 interface 49, and consequently, the data from the 1394 interface 49 remain in the form of a ciphertext. Then, decipherment in the second stage is performed by the application section 61 to convert the data into a cleartext. Consequently, it is inhibited to suitably add a function to the personal computer 2 to allow copying of data (in the form of a cleartext) communicated over the internal bus 51 onto the hard disk unit 47 or some other apparatus.

However, such an authentication method as described above still has a subject to be solved in that, even if it is used, for example, if some apparatus performs some processing such as reverse engineering so that information (for example, key information) which is to be kept secret in the apparatus is exposed (stolen), then there is a possibility that enciphered data may be deciphered using the information.

According to an aspect of the present invention, there is provided an information processing apparatus for use with an information processing system which includes a plurality of information processing apparatus between which data is transmitted, the information processing apparatus comprising production means for producing a list in which identification numbers of those of the plurality of information processing apparatus from which information to be kept secret is exposed are listed, and provision means for providing the list produced by the production means to the other ones of the plurality of information processing apparatus.

According to another aspect of the present invention, there is provided an information processing method for processing information in a system wherein information is communicated between a plurality of information processing apparatus, comprising a production step of producing a list in which identification numbers of those of the plurality of information processing apparatus from which information to be kept secret is exposed are listed, and a provision step of providing the list produced by the production step to the other ones of the plurality of information processing apparatus.

According to a further aspect of the present invention, there is provided a providing medium having recorded thereon a computer program which comprises a production step of producing a list in which identification numbers of those of a plurality of information processing apparatus from which information to be kept secret is exposed are listed, and a provision step of providing the list produced by the production step to the other ones of the plurality of information processing apparatus.

With the information processing system, the information processing method and the providing medium described above, since a list in which identification numbers of those of the plurality of information processing apparatus from which information to be kept secret is exposed other than the particular information processing apparatus are listed is produced and the produced list is provided to the other ones of the plurality of information processing apparatus, the device_ID of an apparatus from which information to be kept secret is exposed can be reported to the other apparatus.

According to a still further aspect of the present invention, there is provided an information processing apparatus for transmitting enciphered data to other information processing apparatus to which the information processing apparatus is connected over a transmission line, comprising storage means for storing identification numbers of the other information processing apparatus as an information number table, reception means for receiving a list in which the identification numbers of those of the other information processing apparatus from which information to be kept secret is exposed are listed, comparison means for comparing the identification numbers listed in the list received by the reception means with the identification numbers in the identification number table stored in the storage means, and transmission means for transmitting the enciphered data to the other information processing apparatus based on a result of the comparison by the comparison means.

According to a yet further aspect of the present invention, there is provided an information processing method for an information processing apparatus for transmitting enciphered data to other information processing apparatus to which the information processing apparatus is connected over a transmission line, comprising a storage step of storing identification numbers of the other information processing apparatus as an information number table, a reception step of receiving a list in which the identification numbers of those of the information processing apparatus from which information to be kept secret is exposed are listed, a comparison step of comparing the identification numbers listed in the list received by the reception step with the identification numbers in the identification number table stored by the storage step, and a transmission step of transmitting the enciphered data to the other information processing apparatus based on a result of the comparison by the comparison step.

According to a yet further aspect of the present invention there is provided a providing medium for storing a computer program to be used by an information processing apparatus which transmits enciphered data to other information processing apparatus to which the information processing apparatus is connected over a transmission line, the providing medium having recorded thereon a computer program which comprises a storage step of storing identification numbers of the other information processing apparatus as an information number table, a reception step of receiving a list in which the identification numbers of those of the information processing apparatus from which information to be kept secret is exposed are listed, a comparison step of comparing the identification numbers listed in the list received by the reception step with the identification numbers in the identification number table stored by the storage step, and a transmission step of transmitting the enciphered data to the other information processing apparatus based on a result of the comparison by the comparison step.

With the information processing apparatus, the information processing method and the providing medium described above, since identification numbers of the other information processing apparatus are stored as an information number table and a list in which the identification numbers of those of the information processing apparatus from which information to be kept secret is exposed are listed is received and then the identification numbers listed in the received list are compared with the identification numbers in the identification number table and the enciphered data are transmitted to the other information processing apparatus based on a result of the comparison, transmission of data to those apparatus from which information to be kept secret is exposed can be prevented.

According to a yet further aspect of the present invention, there is provided an information processing system, comprising at least first, second and third information processing apparatus, the first information processing apparatus including production means for producing a list in which an identification number of the third information processing apparatus from which information to be kept secret is exposed is listed, and provision means for providing the list produced by the production means to the second information processing apparatus, the second information processing apparatus including storage means for storing an identification number of the third information processing apparatus to which the second information processing apparatus is connected over a transmission line, reception means for receiving the list provided by the provision means of the first information processing apparatus, comparison means for comparing the identification number listed in the list received by the reception means with the identification number in the identification number table stored in the storage means, and transmission means for transmitting enciphered data to the third information processing apparatus in response to a result of the comparison by the comparison means.

According to a yet further aspect of the present invention, there is provided an information processing method for an information processing system which includes at least first, second and third information processing apparatus, comprising a production step performed by the first information processing apparatus of producing a list in which an identification number of the third information processing apparatus from which information to be kept secret is exposed is listed, a provision step performed by the first information processing apparatus of providing the list produced by the production step to the second information processing apparatus, a storage step performed by the second information processing apparatus of storing an identification number of the third information processing apparatus to which the second information processing apparatus is connected over a transmission line, a reception step performed by the second information processing apparatus of receiving the list provided by the provision step of the first information processing apparatus, a comparison step performed by the second information processing apparatus of comparing the identification number listed in the list received by the reception step with the identification number in the identification number table stored by the storage step, and a transmission step performed by the second information processing apparatus of transmitting enciphered data to the third information processing apparatus in response to a result of the comparison by the comparison step.

According to a yet further aspect of the present invention, there is provided a providing medium for providing a computer program to be used by an information processing system which includes at least first, second and third information processing apparatus, the providing means providing a computer program which comprises a production step performed by the first information processing apparatus of producing a list in which an identification number of the third information processing apparatus from which information to be kept secret is exposed is listed, a provision step performed by the first information processing apparatus of providing the list produced by the production step to the second information processing apparatus, a storage step performed by the second information processing apparatus of storing an identification number of the third information processing apparatus to which the second information processing apparatus is connected over a transmission line, a reception step performed by the second information processing apparatus of receiving the list provided by the provision step of the first information processing apparatus, a comparison step performed by the second information processing apparatus of comparing the identification number listed in the list received by the reception step with the identification number in the identification number table stored by the storage step, and a transmission step performed by the second information processing apparatus of transmitting enciphered data to the third information processing apparatus in response to a result of the comparison by the comparison step.

With the information processing system, the information processing method and the providing medium described above, since the first information processing apparatus produces a list in which an identification number of the third information processing apparatus from which information to be kept secret is exposed is listed and provides the produced list to the second information processing apparatus and the second information processing apparatus stores an identification number of the third information processing apparatus to which the second information processing apparatus is connected over a transmission line and receives the list provided from the first information processing apparatus, compares the identification number listed in the received list with the identification number in the identification number table, and transmits enciphered data to the third information processing apparatus in response to a result of the comparison, transmission of data to those apparatus from which information to be kept secret is exposed can be prevented and a higher degree of safety can be anticipated.

A preferred form of implementation of the invention described hereinbelow provides an information processing apparatus and method, an information processing system and a providing medium by which transmission of data to an apparatus from which information to be kept secret is exposed is prevented or impeded to ensure a higher degree of safety.

The invention will now be further described, by way of illustrative and non-limiting example, with reference to the accompanying drawings, in which like parts or elements are denoted by like reference signs, and in which:

FIG. 1 is a block diagram showing an example of a construction of a previously preferred information processing system;
FIG. 2 is a block diagram showing an example of internal constructions of a DVD player, a personal computer and a magneto-optical disc apparatus of the information processing system of FIG. 1;
FIGS. 3 and 4 are a diagrammatic view and a timing chart illustrating an authentication procedure in the information processing system of FIG. 1;
FIG. 5 is a diagrammatic view illustrating a format of node_unique_ID used in the information processing system of FIG. 1;
FIG. 6 is a timing chart illustrating another authentication procedure in the information processing system of FIG. 1;
FIG. 7 is a block diagram illustrating an encipherment procedure in the information processing system of FIG. 1;
FIGS. 8 to 10 are timing charts illustrating different authentication procedures in the information processing system of FIG. 1;
FIG. 11 is a block diagram showing an example of a construction of an information processing system to which the present invention is applied;
FIG. 12 is a diagrammatic view illustrating an example of a construction of an identification number table in the information processing system of FIG. 11;
FIG. 13 is a similar view but illustrating a manner in which a new device_ID is added to the identification number table of FIG. 12;
FIG. 14 is a similar view but illustrating processing of sorting the addresses of the identification number table;
FIGS 15 and 16 are flow charts illustrating processing of the information processing system of FIG. 11;
FIG. 17 is a flow chart illustrating processing of a DVD player of the information processing system of FIG. 11; and
FIG. 18 is a timing chart illustrating an authentication processing performed in step s301 of FIG. 17.

Before a preferred embodiment of the present invention is described, in order to make clear a corresponding relationship between various features recited in some of the claims and elements of the embodiment of the present invention described below, the features of these claims are set out below with the corresponding elements to which reference signs denoting them have been added in parentheses following them. However, this provides a mere example and does not signify that the features of these claims or of the present invention be limited to the recited elements.

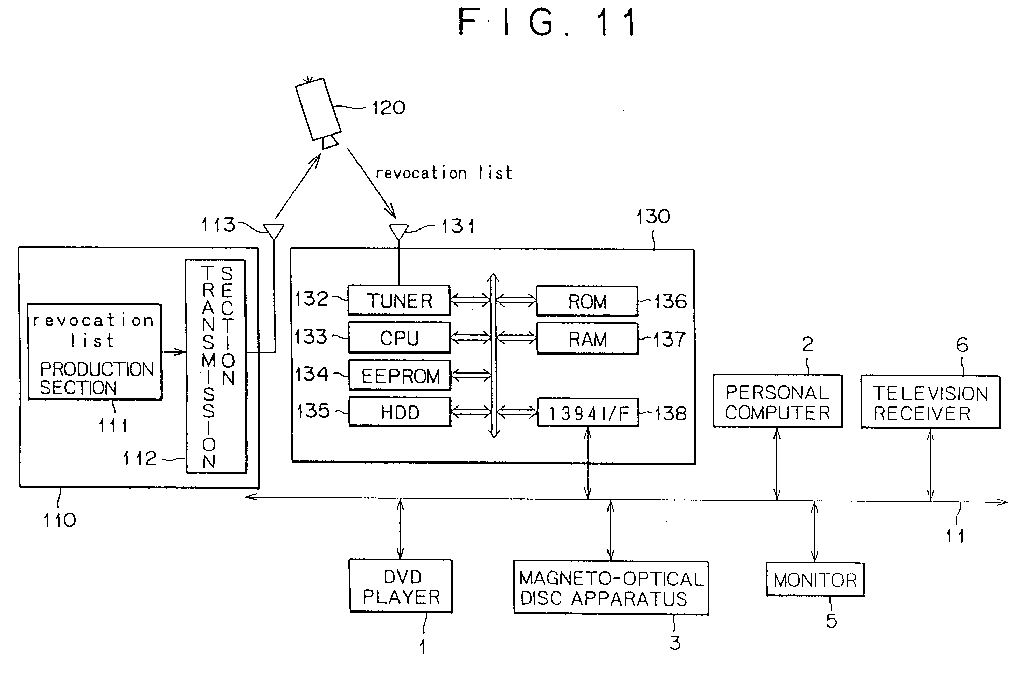

According to claim 1, an information processing apparatus includes production means (for example, revocation list production section 111 of FIG. 11) for producing a list in which identification numbers of those of the plurality of information processing apparatus from which information to be kept secret is exposed are listed, and provision means (for example, a transmission section 112 of FIG. 11) for providing the list produced by the production means to the other ones of the plurality of information processing apparatus.

According to claim 2, the information processing apparatus further includes addition means (for example, the revocation list production section 111 of FIG. 11) for adding a digital signature of the information processing apparatus itself to the list produced by the production means.

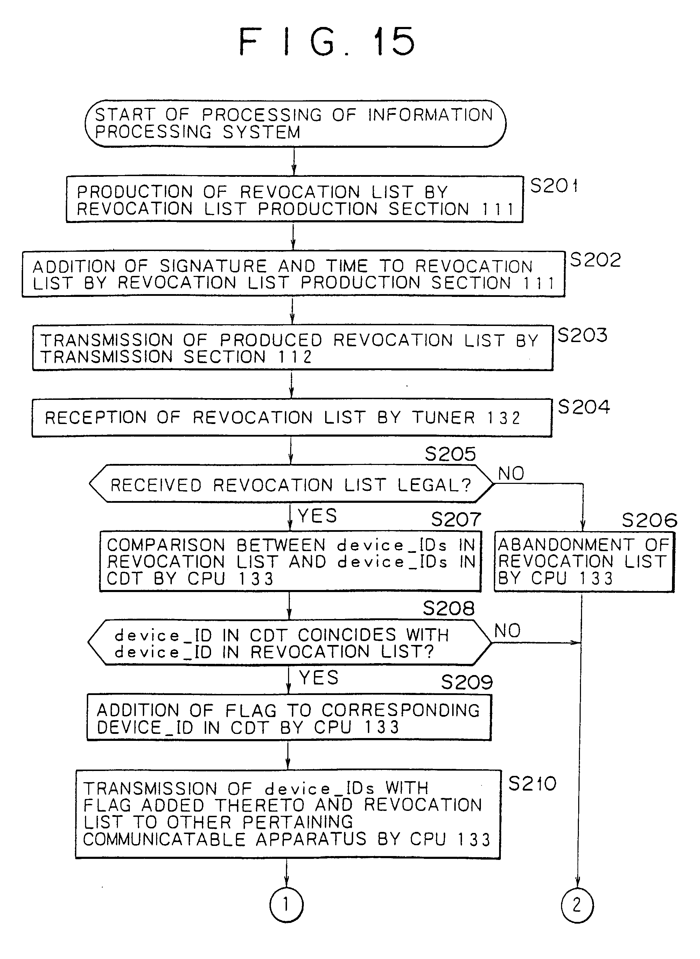

According to claim 8, an information processing apparatus includes storage means (for example, an EEPROM 134 of FIG. 11) for storing identification numbers of other information processing apparatus as an information number table, reception means (for example, a tuner 132 of FIG. 11) for receiving a list in which the identification numbers of those of the other information processing apparatus from which information to be kept secret is exposed are listed, comparison means (for example, a step S207 of FIG. 15) for comparing the identification numbers listed in the list received by the reception means with the identification numbers in the identification number table stored in the storage means, and transmission means (for example, a 1394 interface 138 of FIG. 11) for transmitting the enciphered data to the other information processing apparatus based on a result of the comparison by the comparison means.

According to claim 10, the information processing apparatus further includes authentication means (for example, a step S205 of FIG. 15) for authenticating whether or not the list is legal using the signature added to the list.

According to claim 11, the information processing apparatus further includes flag addition means (for example, a step S209 of FIG. 15) for adding, when a result of the comparison by the comparison means reveals that the identification number table includes any identification number which coincides with one of the identification numbers in the list, a flag to the corresponding identification number in the identification number table.

Referring now to FIG. 11, there is shown an example of a construction of an information processing system to which the present invention is applied. In the information processing system shown, a management center 110 includes a revocation list production section 111 for producing a revocation list in which identification numbers of illegal apparatus are described, and a transmission section 112 for transmitting the revocation list produced by the revocation list production section 111 through an antenna 113.

The revocation list production section 111 produces, when exposure of information managed by a predetermined apparatus is discovered, a revocation list in which an identification number (device_ID) of the apparatus is listed as a device_ID of an illegal apparatus. Further, the revocation list production section 111 adds to the thus produced revocation list a signature (for example, a digital signature in which a public key encipherment is used) representing that the party who has produced the revocation list is the management center 110 and its production time. The digital signature is used by an apparatus which receives the revocation list when it verifies whether or not the revocation list is legal. The transmission section 112 transmits the revocation list produced by the revocation list production section 111 at a predetermined timing through the antenna 113. It is to be noted that the timing may be periodical such as, for example, once a month or may be, for example, a timing when a request is received from another apparatus.

The revocation list transmitted from the management center 110 is provided to another apparatus (in the present example, to a data broadcasting reception apparatus 130), for example, through a satellite 120.

The data broadcasting reception apparatus 130 is connected to a 1394 bus 11 through a 1394 interface 138. A tuner 132 receives, through an antenna 131, a revocation list transmitted from the management center 110 through the satellite 120 and outputs it to a CPU 133. The CPU 133 executes various processes in accordance with a program stored in a ROM 136, and a RAM 137 suitably stores data, a program and so forth required when the CPU 133 executes various processes. A hard disk apparatus (HDD) 135 can record or reproduce data or a program. An EEPROM 134 stores information which is required to be kept stored also after the powering off the apparatus (such as, for example, a revocation list). An internal bus 139 interconnects the components of the data broadcasting reception apparatus 130 mentioned above.

It is to be noted that the DVD player 1, the personal computer 2 and the magneto-optical disc apparatus 3 have detailed constructions similar to those described hereinabove with reference to FIG. 2.

Each of the apparatus connected to the 1394 bus 11 is provided with a device_ID (such as, for example, a node_unique_ID) which is an identification number unique to the apparatus. Further, those ones of the apparatus mentioned above which can communicate data with another apparatus such as the data broadcasting reception apparatus 130, DVD player 1, personal computer 2 and magneto-optical disc apparatus 3 (where there is no particular necessity for distinction among the individual apparatus, the apparatus are suitably referred to generally as communicatable apparatus) each prepares, in a predetermined area of an EEPROM built therein (for example, in the case of the data broadcasting reception apparatus, in the EEPROM 134), an identification number table (connected device_ID table: CDT) in which device_IDs of apparatus connected to the self apparatus over the 1394 bus 11 (more particularly, the other party apparatus to which the self apparatus has transmitted data at least once). It is to be noted that those of the apparatus described above which cannot transmit data need not have a connected device_ID table.

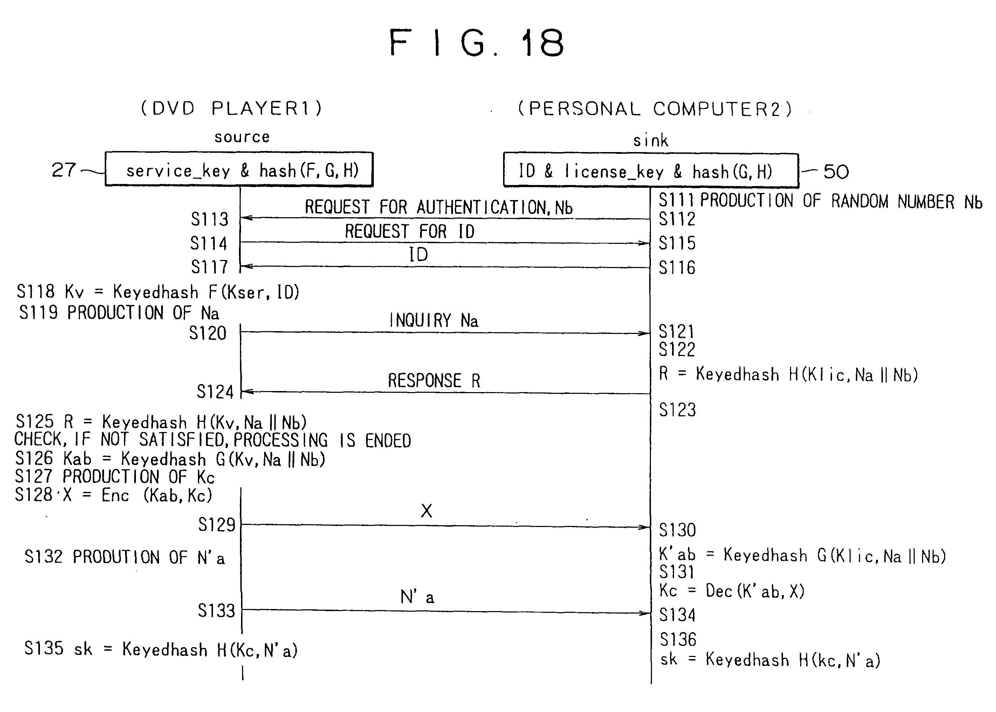

Each communicatable apparatus can acquire, for example, when it performs authentication processing which will be hereinafter described with reference to FIG. 18 (naturally some other authentication processing may be performed), the device_ID of the other party apparatus and store it into its connected device_ID table. Then, after the device_ID of the other party apparatus is confirmed (that is, after it is confirmed whether or not the other party apparatus is illegal), the communicatable apparatus determines whether or not it should transmit to the other party apparatus a key for deciphering enciphered data (for example, a session key or a time-varying key).

The data broadcasting reception apparatus 130 can suitably read out the device_IDs of all of the apparatus connected to the 1394 bus 11 or information stored in the connected device_ID tables of the communicatable apparatus at a predetermined timing. The timing may be periodical such as, for example, once a week, or, where it is possible to detect that an apparatus has been added newly to or removed from the 1394 bus 11, the timing may be a timing of such detection. Then, the data broadcasting reception apparatus 130 can reflect the thus read information on the connected device_ID table of the apparatus itself (more particularly, can store a new item).

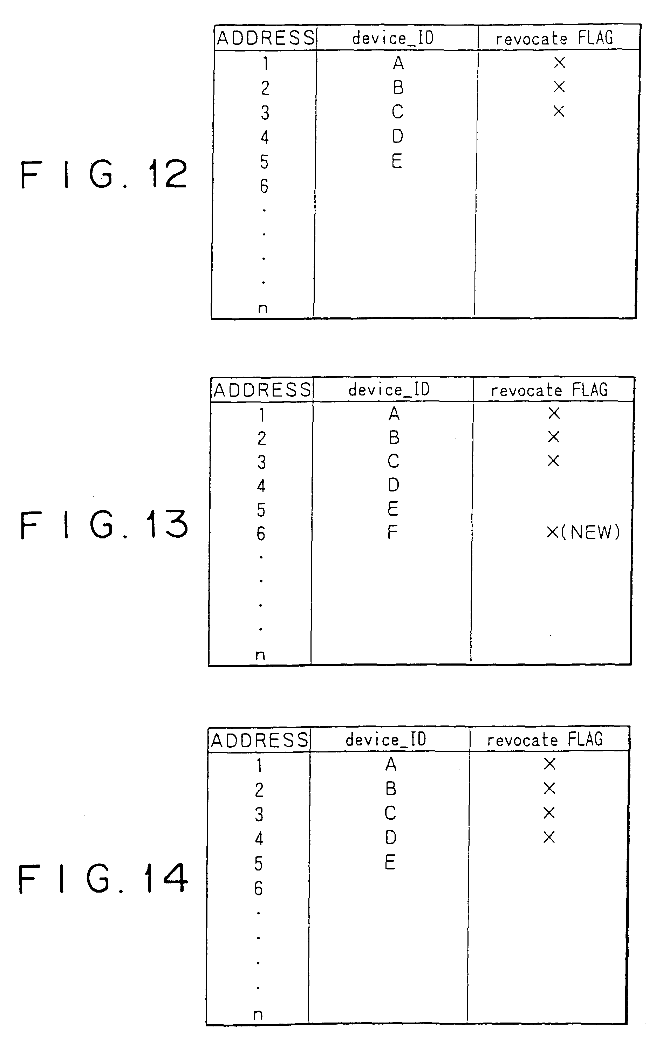

FIG. 12 illustrates an example of a construction of a connected device_ID table. Referring to FIG. 12, in the example illustrated, device_IDs of apparatus connected over the 1394 bus 11 and revocate flags which indicate whether or not the device_IDs are those of illegal apparatus (device_IDs listed in the revocation list) are stored at addresses 1 to n of the connected device_ID table. In the example illustrated, the flag (mark ✕) is added to the device_ID A through the device_ID C at the addresses 1 to 3 (more particularly, the value indicating the flag is set, for example, to 1). In other others, the apparatus which correspond to the device_ID A to device_ID C are determined to be illegal apparatus.

The data broadcasting reception apparatus 130 (or any other communicatable apparatus) sorts the connected device_ID table such that those device_IDs to which the flag is stored (that is, device_IDs corresponding to illegal apparatus) are normally arranged at the top addresses. For example, if it is discovered that the apparatus which corresponds to the device_ID F stored at the address 6 is an illegal apparatus and the flag is added to the address 6 as seen in FIG. 13, then the CPU 133 of the data broadcasting reception apparatus 130 moves the device_ID F stored at the address 6 to the address 4 and moves the device_ID D and the device_ID E to the address 5 and the address 6, respectively, as seen in FIG. 14.

It is assumed that the connected device_ID table can store n (for example, 100) items (device_IDs and flags). However, it is assumed that the connected device_ID table of a management apparatus (in the preset case, the data broadcasting reception apparatus 130) from among the various communicatable apparatus which manages the device IDs or the connected device_ID tables of the individual apparatus using a revocation list provided from the management center 110 can store more than n device_IDs and flags. Here, if an item to be stored newly into the connected device_ID table appears in a condition wherein all of the addresses of the connected device_ID table are used, then the oldest one of those of the items in the connected device_ID table to which the flag is not added is erased, and the new item is stored into the thus emptied address.

For example, it is assumed now that a connected device_ID table can store totaling 100 items and stores items such that those items to which the flag is added are stored in a descending order of the elapsed time after storage at the address 1 to 10 while those items to which the flag is not added are stored in a descending order of the elapsed time after storage at the addresses 11 to 100. Now, if the apparatus having this connected device_ID table acquires a device_ID of the other party apparatus to which transmission of data is performed for the first time and tries to store the device_ID as a new item into the connected device_ID table, the item at the address 11 which is the oldest one of those items to which the flag is not added is erased, and those items stored at the addresses 12 to 100 are successively shifted by one address (moved to the addresses 11 to 99). Then, into the address 100 which becomes empty by such shifting operation, the new item is stored.

Further, for example, when the apparatus having this connected device_ID table receives a new revocation list and tries to store a device_ID in the revocation list into the connected device_ID table, the item at the address 11 is erased and the device_ID of the revocation list is stored into the address 11 together with the flag.

Further, where the connected device_ID table is filled with those items to which the flag is added, if the item to be stored newly is a device_ID of a revocation list received newly, the apparatus which has the connected device_ID table erases the oldest item of the connected device_ID table and stores the device_ID into the thus emptied address, but if the item to be stored newly is a device_ID of the other party apparatus to which data transmission has been performed for the first time, then the device_ID is not stored into the connected device_ID table.

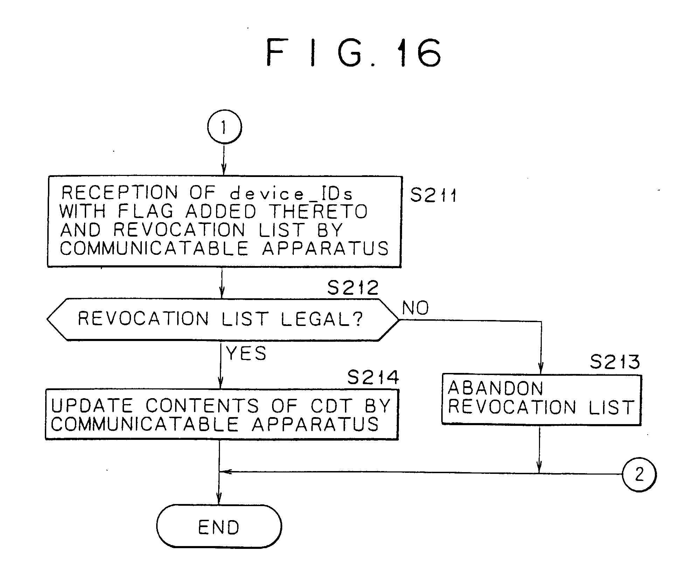

Now, operation of the information processing system of FIG. 11 is described with reference to the flow charts of FIGS. 15 and 16. Referring first to FIG. 15, the revocation list production section 111 of the management center 110 produces a revocation list which indicates device_IDs of illegal apparatus in step S201, and adds a signature and a time point to the thus produced revocation list in step S202. In step S203, the transmission section 112 transmits the revocation list produced by the revocation list production section 111 at a predetermined timing through the antenna 113.

Then in step S204, the tuner 132 of the data broadcasting reception apparatus 130 receives the revocation list provided through the satellite 120 at the antenna 131. The CPU 133 verifies in step S205 whether or not the received revocation list is legal. In particular, the CPU 133 verifies whether or not the signature added to the revocation list is that of the management center 110. It is to be noted that it is assumed that, in the verification processing, for example, only an apparatus which has a public key issued from the management center 110 can confirm the signature.

If it is discriminated in step S205 that the revocation list is not legal (that is, the signature is not that of the management center 110), then the CPU 133 abandons the revocation list as being illegal in step S206, thereby ending the processing. On the other hand, if it is discriminated in step S205 that the revocation list is legal (that is, the signature is that of the management center 110), then the control advances to step S207, in which the CPU 133 compares the device_IDs of the illegal apparatus listed in the revocation list with the device_IDs in the connected device_ID table. In step S208, the CPU 133 discriminates whether or not the connected device_ID table includes a device_ID which coincides with one of the device_IDs listed in the revocation list, and ends its processing if it is discriminated that the connected device_ID table does not include a corresponding device_ID.

If it is discriminated in step S208 that the connected device_ID table includes a device_ID which coincides with one of the device_IDs listed in the revocation list, then the control advances to step S209, in which the CPU 133 adds the flag to the corresponding device_ID in the connected device_ID table. Then, the CPU 133 controls, in step S210, the 1394 interface 138 so that those device_IDs in the connected device_ID table to which the flag is added are transmitted to the other communicatable apparatus connected thereto over the 1394 bus 11 together with the revocation list.

Each of the communicatable apparatus receives, in step S211 of FIG. 16, the device_IDs of the data broadcasting reception apparatus 130 to which the flag is added and the revocation list and discriminates, in step S212, whether or not the received revocation list is legal. If it is discriminated in step S212 that the revocation list is not legal (that is, the signature is not that of the management center 110), then the revocation list is abandoned in step S213, thereby ending the processing.

If it is discriminated in step S212 that the revocation list is legal, then the control advances to step S214, in which the communicatable apparatus updates the contents of the connected device_ID table thereof based on the received revocation list (that is, adds the flag to the corresponding device_IDs).

By the processing described above, the connected device_ID tables of all of the communicatable apparatus connected to the 1394 bus 11 are updated based on the revocation list produced by the management center 110.

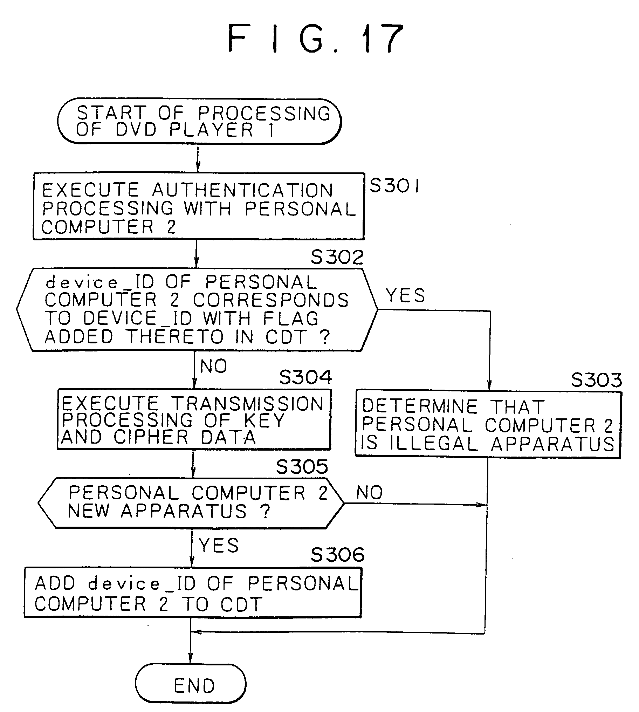

Now, taking the foregoing into account, processing, for example, of the DVD player 1 serving as a communicatable apparatus when a request for transmission of data is transmitted from the personal computer 2 to the DVD player 1 is described with reference to FIG. 17. First in step S301, the DVD player 1 executes authentication processing with the personal computer 2 (which will be hereinafter described with reference to FIG. 18). Consequently, the DVD player 1 acquires the device_ID of the personal computer 2. In step S302, it is discriminated whether or not the device_ID of the personal computer 2 is a device_ID which is included in the connected device_ID table of the DVD player 1 itself and to which the flag is added. If it is discriminated that the device_ID of the personal computer 2 is a device_ID to which the flag is added in the connected device_ID table, then the DVD player 1 determines in step S303 that the personal computer 2 is an illegal apparatus, thereby ending the processing.

If it is discriminated in step S302 that the device_ID of the personal computer 2 is not a device_ID to which the flag is added in the connected device_ID table, then the control advances to step S304, in which the DVD player 1 executes transmission processing of a key and encipherment data to the personal computer 2. Then in step S305, the DVD player 1 discriminates whether or not the personal computer 2 is a new apparatus (that is, an apparatus to which transmission processing has been performed for the first time). If the DVD player 1 determines that the personal computer 2 is not a new apparatus (that is, an apparatus to which transmission processing has been performed already), the processing is ended.

If it is discriminated in step S305 that the personal computer 2 is a new apparatus (that is, an apparatus to which transmission processing has been performed for the first time), then the control advances to step S306, in which the DVD player 1 adds the device_ID of the personal computer 2 to the connected device_ID table. Consequently, since the data broadcasting reception apparatus 130 can acquire, when it reads out the connected device_ID table of the DVD player 1 at a predetermined timing, the device_ID of an apparatus which has been newly connected to the 1394 bus 11 (in the present instance, the personal computer 2), for example, if it is discovered from a revocation list received next that the personal computer 2 is an illegal apparatus, then this is reported to individual communicatable apparatus (except the personal computer 2) connected to the 1394 bus 11. Consequently, the personal computer 2 can be excluded substantially.

Each communicatable apparatus can discriminate based on a revocation list provided from the management center 110 whether or not the other party apparatus is an illegal apparatus in such a manner as described above, and transmission of data of a movie and so forth can be performed in safety.

FIG. 18 is a timing chart illustrating an example of processing of authentication executed in step S301 of FIG. 17. In the present example, the EEPROM 27 of the DVD player 1 serving as a source has a service key (service_key) and a hash function (F, G, H) stored therein in advance. Meanwhile, the personal computer 2 serving as a sink has a device_ID (ID), a license key (license_key) and a hash function (G, H) kept secret in the EEPROM 50 thereof. First in step S111, the personal computer 2 produces a random number Nb. Then in step S112, the personal computer 2 controls the 1394 interface 49 to transmit a request for authentication together with the produced random number Nb to the DVD player 1 over the 1394 bus 11.

The DVD player 1 receives the request for authentication and the random number Nb in step S113. Then in step S114, the DVD player 1 requests the personal computer 2 for a device_ID. The personal computer 2 receives the request for the device_ID in step S115. In response to the request, the personal computer 2 reads out the device_ID recorded in the EEPROM 50 and transmits it to the DVD player 1 in step S116. Consequently, the DVD player 1 can acquire the device_ID of the personal computer 2.

In step S117, the DVD player 1 receives the device_ID transmitted from the personal computer 2, and in step S118, the personal computer 2 applies the received ID to the hash function F which employs the service key (Kser) as a key as given by the following expression

$$Kv = keyedhash\ F(Kser, ID)$$

to produce data Kv. In the expression above, keyedhash A1(A2, A3) indicates that A3 is applied to the hash function AI which employs A2 as a key.

Then, in step S119, the DVD player 1 produces a random number Na, and then in step S120, the DVD player 1 transmits the random number Na to the personal computer 2. The personal computer 2 receives the random number Na in step S121, and applies, in step S122, data (Na II Nb) obtained by connecting the random number Na and the random number Nb to the hash function H which employs the license key Klic as a key as given by the following expression

$$R = keyedhash\ H(Klic, Na\ II\ Nb)$$

to produce data R.

Then, the personal computer 2 transmits the thus produced data R to the DVD player 1 in step S123. The DVD player 1 receives the data R in step S124 and discriminates, in step S125, whether or not a value obtained by applying the connection data (Na II Nb) to the hash function H which employs the data Kv produced in step S118 as a key is equal to the received data R.

If it is discriminated in step S125 that the two data are not equal to each other, then the received data R is abandoned, and the authentication processing is ended (that is, it is determined that the personal computer 2 is illegal). On the other hand, if it is discriminated in step S125 that the two data are equal to each other, then the control advances to step S126, in which the DVD player 1 applies the connection data (Na II Nb) to the hash function G which employs the data Kv as a key as given by the following expression

$$Kab = keyedhash\ G(Kv, Na\ II\ Nb)$$

to produce a key Kab.

It is to be noted that this key Kab is used temporarily between the DVD player 1 and the personal computer 2. For example, where the magneto-optical disc apparatus 3 serving as a sink is connected to the DVD player 1 serving as a source in addition to the personal computer 2, a key to be used between the DVD player 1 and the magneto-optical disc apparatus 3 is produced separately.

Then in step S127, the DVD player 1 produces a key Kc to be used commonly in the session, and in step S128, the DVD player 1 enciphers the key Kc using the key Kab to produce enciphered data (enciphered key) X. In other words, the DVD player 1 calculates the following expression

$$X = Enc(Kab, Kc)$$

where Enc(B1, B2) indicates that B2 is enciphered using B1 as a key.

Then in step S129, the DVD player 1 transmits the enciphered data X to the personal computer 2. In step S130, the personal computer 2 receives the enciphered data X transmitted from the DVD player 1, and applies, in step S131, the connection data (Na II Nb) to the hash function G which employs the license key Klic as a key to produce a key K'ab. In particular, the personal computer 2 calculates the following expression:

$$K'ab = keyedhash\ G(Klic, Na\ II\ Nb)$$

Then in step S131, the personal computer 2 deciphers the enciphered data X using the key K'ab as given by

the following expression

$$Kc = Dec(K'ab, X)$$

to obtain a key Kc. It is to be noted that Dec(C1, C2) in the expression above signifies that C2 is deciphered using C1 as a key.

Consequently, also where a plurality of apparatus each of which serves as a sink are present, the same key Kc can be shared with safely between the source and all of the sinks.

Then, the firmware 20 of the DVD player 1 produces a random number N'a in step S121 and transmits the random number N'a to the personal computer 2 in step S133. The license manager 62 of the personal computer 2 receives the random number N'a in step S134. Then, the firmware 20 of the DVD player 1 and the license manager 62 of the personal computer 2 individually calculate, using the key Kc and the random number N'a, the following expression

$$sk = keyedhash\ H(Kc, N'a)$$

to obtain a session key sk in steps S135 and S136, respectively.

It is to be noted that, when a session key is to be changed, the source produces a new random number and transmits it to all apparatus which each serves as a sink so that each of the apparatus produces a session key using the new random number.

By the way, while, in the processing described above, in order to allow each communicatable apparatus to confirm the legality of a revocation list, the data broadcasting reception apparatus 130 which serves as a management apparatus transmits a received revocation list to the individual communicatable apparatus, where the revocation list has a large data size, it is estimated that a high cost is required. Thus, as a countermeasure for this, the following two methods are expected.

(1) The management center 110 divides, when it produces a revocation list, the revocation list into a suitable number of parts, adds a signature to each of the divided partial list parts, and provides the resulting partial list parts to a management apparatus such as the data broadcasting reception apparatus 130, and the management apparatus such as the data broadcasting reception apparatus 130 transmits only those of the partial list parts of the revocation list provided from the management center 110 which relate to the apparatus connected to the management apparatus itself to the other communicatable apparatus connected to the management apparatus.

(2) A management apparatus such as the data broadcasting reception apparatus 130 is provided with a function of producing a digital signature, and extracts that portion of a revocation list which is included in the connected device_ID table of the management apparatus, newly produces a revocation list for a network of the management apparatus itself, adds a signature to the new revocation list and transmits the revocation list to the other communicatable apparatus connected to the management apparatus.

It is to be noted that a program for executing various instructions or a revocation list described above may be provided to a user through a transmission medium such as a magnetic disc or a CD-ROM, or may be provided to a user through a transmission medium such as a network, or else, if necessary, may be stored into a built-in RAM or onto a hard disk or the like so that it may be utilized.

While preferred embodiments of the present invention have been described using specific terms, such description is for illustrative purpose only, and it is to be understood that changes and variations may be made without departing from the scope of the invention.

## Claims

1. An information processing apparatus for use with an information processing system which includes a plurality of information processing apparatus between which data is transmitted, said information processing apparatus comprising:

   production means for producing a list in which identification numbers of those of said plurality of information processing apparatus from which information to be kept secret is exposed are listed; and
   provision means for providing the list produced by said production means to the other ones of said plurality of information processing apparatus.

2. An information processing apparatus according to claim 1, further comprising addition means for adding a digital signature of said information processing apparatus itself to the list produced by said production means.

3. An information processing apparatus according to claim 2, wherein said addition means further adds a time at which the list is produced.

4. An information processing apparatus according to claim 1, further comprising division means for dividing the list produced by said production means, and wherein said provision means provides the divisional parts of the list.

5. An information processing apparatus as claimed in claim 4, further comprising addition means for adding a digital signature of said information processing apparatus itself to each of the divided parts obtained by the division of the list by said division means.

6. An information processing method for processing information in a system wherein information is communicated between a plurality of information processing apparatus, comprising:
   a production step of producing a list in which identification numbers of those of said plurality of information processing apparatus from which information to be kept secret is exposed are listed; and a provision step of providing the list produced by the production step to the other ones of said plurality of information processing apparatus.

7. A providing medium having recorded thereon a computer program which comprises:

   a production step of producing a list in which identification numbers of those of a plurality of information processing apparatus from which information to be kept secret is exposed are listed; and
   a provision step of providing the list produced by the production step to the other ones of said plurality of information processing apparatus.

8. An information processing apparatus for transmitting enciphered data to other information processing apparatus to which said information processing apparatus is connected over a predetermined transmission line, comprising:

   storage means for storing identification numbers of the other information processing apparatus as an information number table;
   reception means for receiving a list in which the identification numbers of those of the other information processing apparatus from which information to be kept secret is exposed are listed;
   comparison means for comparing the identification numbers listed in the list received by said reception means with the identification numbers in said identification number table stored in said storage means; and
   transmission means for transmitting the enciphered data to the other information processing apparatus based on a result of the comparison by said comparison means.

9. An information processing apparatus according to claim 8, wherein the information is a key for deciphering the enciphered data.

10. An information processing apparatus according to claim 8, wherein the list is provided with a signature of the apparatus by which the list has been produced, and said information processing apparatus further comprises authentication means for authenticating whether or not the list is legal using the signature added to the list.

11. An information processing apparatus according to claim 8, further comprising flag addition means for adding, when a result of the comparison by said comparison means reveals that said identification number table includes any identification number which coincides with one of the identification numbers in the list, a flag to the corresponding identification number in the identification number table.

12. An information processing apparatus according to claim 8, further comprising identification number addition means for adding, when a result of the comparison by said comparison means reveals that said identification number table does-not include any identification number which coincides with any one of the identification numbers in the list, the identification numbers in the list to said identification number table and adding a flag to each of the added identification numbers.

13. An information processing apparatus according to claim 12, wherein, when said identification number table has a predetermined number of items stored already therein, ones of those identification numbers having the flag not added thereto which were stored oldest are erased, and the identification numbers in the list are added to said identification number table and the flag is added to each of the added information numbers.

14. An information processing apparatus according to claim 8, wherein, when said information processing apparatus performs transmission of data for the first time to any one of the other information processing apparatus, said information processing apparatus stores the identification number of the one information processing apparatus into said information number table.

15. An information processing apparatus according to claim 14, wherein, where said information number table has a predetermined number of items stored already therein, one of those identification numbers having no flag added thereto which was stored oldest is erased, and the identification number of the one information processing apparatus is stored into said identification number table.

16. An information processing apparatus according to claim 8, further comprising production means for extracting desired items from within the received list and newly producing a list formed from the extracted items, and said transmission means transmits also the newly produced list to the other information processing apparatus.

17. An information processing apparatus according to claim 16, further comprising addition means for adding a digital signature of said information processing apparatus itself to the list newly produced by said production means.

18. An information processing apparatus according to claim 17, wherein said addition means further adds a time at which the list is produced.

19. An information processing apparatus according to claim 11, wherein said transmission means does not transmit the enciphered data or a key for deciphering the enciphered data to those of the other information processing apparatus connected to said information processing apparatus which correspond to the identification numbers to which the flag is added by said addition means.

20. An information processing apparatus according to claim 11, wherein said transmission means transmits the identification number table including the identification numbers to which the flag is added by said addition means to the other information processing apparatus.

21. An information processing apparatus according to claim 8, wherein said transmission line is an IEEE1394 bus.

22. An information processing method for an information processing apparatus for transmitting enciphered data to other information processing apparatus to which said information processing apparatus is connected over a predetermined transmission line, comprising:

a storage step of storing identification numbers of the other information processing apparatus as an information number table;
a reception step of receiving a list in which the identification numbers of those of the information processing apparatus from which information to be kept secret is exposed are listed;
a comparison step of comparing the identification numbers listed in the list received by the reception step with the identification numbers in said identification number table stored by the storage step; and
a transmission step of transmitting the enciphered data to the other information processing apparatus based on a result of the comparison by the comparison step.

23. A providing medium for storing a computer program to be used by an information processing apparatus which transmits enciphered data to other information processing apparatus to which said information processing apparatus is connected over a predetermined transmission line, said providing medium having stored thereon a computer program which comprises:

a storage step of storing identification numbers of the other information processing apparatus as an information number table;
a reception step of receiving a list in which the identification numbers of those of the information processing apparatus from which information to be kept secret is exposed are listed;
a comparison step of comparing the identification numbers listed in the list received by the reception step with the identification numbers in said identification number table stored by the storage step; and
a transmission step of transmitting the enciphered data to the other information processing apparatus based on a result of the comparison by the comparison step.

**24.** An information processing system, comprising:

at least first, second and third information processing apparatus;
said first information processing apparatus including production means for producing a list in which an identification number of said third information processing apparatus from which information to be kept secret is exposed is listed, and provision means for providing the list produced by said production means to said second information processing apparatus;
said second information processing apparatus including storage means for storing an identification number of said third information processing apparatus to which said second information processing apparatus is connected over a predetermined transmission line, reception means for receiving the list provided by said provision means of said first information processing apparatus, comparison means for comparing the identification number listed in the list received by said reception means with the identification number in the identification number table stored in said storage means, and transmission means for transmitting enciphered data to said third information processing apparatus in response to a result of the comparison by said comparison means.

**25.** An information processing method for an information processing system which includes at least first, second and third information processing apparatus, comprising:

a production step performed by said first information processing apparatus of producing a list in which an identification number of said third information processing apparatus from which information to be kept secret is exposed is listed;
a provision step performed by said first information processing apparatus of providing the list produced by the production step to said second information processing apparatus;
a storage step performed by said second information processing apparatus of storing an identification number of said third information processing apparatus to which said second information processing apparatus is connected over a predetermined transmission line;
a reception step performed by said second information processing apparatus of receiving the list provided by the provision step of said first information processing apparatus;
a comparison step performed by said second information processing apparatus of comparing the identification number listed in the list received by the reception step with the identification number in the identification number table stored by the storage step; and
a transmission step performed by said second information processing apparatus of transmitting enciphered data to said third information processing apparatus in response to a result of the comparison by the comparison step.

**26.** A providing medium for providing a computer program to be used by an information processing system which includes at least first, second and third information processing apparatus, said providing medium providing a computer program which comprises:

a production step performed by said first information processing apparatus of producing a list in which an identification number of said third information processing apparatus from which information to be kept secret is exposed is listed;
a provision step performed by said first information processing apparatus of providing the list produced by the production step to said second information processing apparatus;
a storage step performed by said second information processing apparatus of storing an identification number of said third information processing apparatus to which said second information processing apparatus is connected over a predetermined transmission line;
a reception step performed by said second information processing apparatus of receiving the list provided by the provision step of said first information processing apparatus;
a comparison step performed by said second information processing apparatus of comparing the identification number listed in the list received by the reception step with the identification number in the identification number table stored by the storage step; and
a transmission step performed by said second information processing apparatus of transmitting enciphered data to said third information processing apparatus in response to a result of the comparison by the comparison step.

# F I G. 1

EP 0 930 556 A2

# FIG. 2

# F I G. 3

# F I G. 4

(DVD PLAYER 1)                    (PERSONAL COMPUTER 2)

source                                    sink

| servis_key & hash | ⊢27          | ID & license_key | ⊢50

S1 ———— REQUEST FOR ID ————→ S2

S3 ←———————— ID ————————

S4

S5  k = hash( ID ‖ service_key )

S6  PRODUCTION OF ENCIPHERMENT KEY sk

S7  e = Enc(lk, sk)

S8 ———————— e ————————→ S9

S10

sk′ = Dec(licence_key, e)

# F I G. 5

|← ———————— 8 BYTES ———————— →|

| 08 | 00 | 46 | XX | XX | XX | XX | XX |

|← MANAGEMENT BY IEEE →|← MANAGEMENT BY MAKER →|

# F I G. 6

(DVD PLAYER1)　　　　(PERSONALCOMPUTER2)　　(MAGNETO-OPTICAL DISC APPARATUS 3)

source　　　　　　　　　sink1　　　　　　　　　sink2

27 ~ | service_key & hash |　| ID1 & license_key1 |　| ID2 & license_key2 | ~ 37

50

S11　REQUEST FOR ID → S12

S14　← ID1　S13

S15 lk1 = hash(ID1 ‖ service_key)
S16 PRODUCTION OF sk
S17 e1 = Enc(lk1, sk)

S18　e1 → S19

S20　sk1′ = Dec( license_key1, e1 )

S21　REQUEST FOR ID → S22

S24　← ID2　S23

S25 lk2 = hash( ID2 ‖ service_key)
S26 e2 = Enc( lk1, sk )

S27　e2 → S28

S29　sk2′ = Dec( license_key2, e2 )

EP 0 930 556 A2

F I G. 7

# F I G. 8

**(DVD PLAYER1)**
source
27 — | service_key & hash |

**(PERSONAL COMPUTER2)**
sink 1
| ID1 & license_key1 | 50

**(MAGNETO-OPTICAL DISC APPARATUS 3)**
sink 2
| ID2 & license_key 2 | — 37

S41 — REQUEST FOR ID
S42
S43
S44 — ID1
S45 — ID2
S46
S47
S48 $lk1 = \text{hash }(ID1 \,\|\, service\_key)$
S49 $lk2 = \text{hash }(ID2 \,\|\, service\_key)$
S50 — PRODUCTION OF $sk$
S51 $e1 = \text{Enc }(lk1, sk)$
S52 $e2 = \text{Enc }(lk2, sk)$
S53 $e = ID1 \,\|\, e1 \,\|\, ID2 \,\|\, e2$
S54
e
S55
S56
S57 $sk1' = \text{Dec }(license\_key1, e1)$
S58 $sk2' = \text{Dec }(license\_key2, e2)$

# F I G . 9

(DVD PLAYER1)      (PERSONAL COMPUTER2)

source            sink

| service_key, hash, service_ID | ~27      | ID & license_key1, 2, 3 |

50

S81    REQUEST FOR ID, servise_ID    S82

S84        ID        S83

S85 $IK = hash\ (ID \parallel service\_key)$

S86 PRODUCTION OF sk

S87 $e = Enc\ (Ik,\ sk)$

S88          e          S89

S90

$sk' = Dec\ (license\_key,\ e)$

# F I G . 10

(DVD PLAYER1)      (PERSONAL COMPUTER2)

source            sink

| service_key, hash, pRNG | ~27      | ID, LK, LK', G, pRNG |

50

S101    REQUEST FOR ID    S102

S104        ID        S103

S105 $H = hash\ (ID \parallel service\_key)$

S106 PRODUCTION OF sk

S107 $e = sk\ (+)\ pRNG\ (H)$

S108          e          S109

S110

$sk' = e\ (+)\ G(Lk')\ (+)\ pRNG(LK)$

# F I G . 1 1

EP 0 930 556 A2

## F I G . 12

| ADDRESS | device_ID | revocate FLAG |
|---------|-----------|---------------|
| 1 | A | × |
| 2 | B | × |
| 3 | C | × |
| 4 | D | |
| 5 | E | |
| 6 | | |
| . | | |
| . | | |
| . | | |
| . | | |
| n | | |

## F I G . 13

| ADDRESS | device_ID | revocate FLAG |
|---------|-----------|---------------|
| 1 | A | × |
| 2 | B | × |
| 3 | C | × |
| 4 | D | |
| 5 | E | |
| 6 | F | ×(NEW) |
| . | | |
| . | | |
| . | | |
| . | | |
| n | | |

## F I G . 14

| ADDRESS | device_ID | revocate FLAG |
|---------|-----------|---------------|
| 1 | A | × |
| 2 | B | × |
| 3 | C | × |
| 4 | D | × |
| 5 | E | |
| 6 | | |
| . | | |
| . | | |
| . | | |
| . | | |
| n | | |

# F I G. 15

START OF PROCESSING OF INFORMATION PROCESSING SYSTEM

↓

PRODUCTION OF REVOCATION LIST BY REVOCATION LIST PRODUCTION SECTION 111  S201

↓

ADDITION OF SIGNATURE AND TIME TO REVOCATION LIST BY REVOCATION LIST PRODUCTION SECTION 111  S202

↓

TRANSMISSION OF PRODUCED REVOCATION LIST BY TRANSMISSION SECTION 112  S203

↓

RECEPTION OF REVOCATION LIST BY TUNER 132  S204

↓

S205
RECEIVED REVOCATION LIST LEGAL? —— NO

YES ↓                                                      S206
S207                                                  ABANDONMENT OF REVOCATION LIST BY CPU 133
COMPARISON BETWEEN device_IDs IN REVOCATION LIST AND device_IDs IN CDT BY CPU 133

↓

S208
device_ID IN CDT COINCIDES WITH device_ID IN REVOCATION LIST? —— NO

YES ↓

S209
ADDITION OF FLAG TO CORRESPONDING DEVICE_ID IN CDT BY CPU 133

↓

TRANSMISSION OF device_IDs WITH FLAG ADDED THERETO AND REVOCATION LIST TO OTHER PERTAINING COMMUNICATABLE APPARATUS BY CPU 133  S210

↓

( 1 )                                                    ( 2 )

# F I G. 16

(1)

↓

RECEPTION OF device_IDs
WITH FLAG ADDED THERETO
AND REVOCATION LIST BY
COMMUNICATABLE APPARATUS | S211

↓

S212

< REVOCATION LIST LEGAL? >  —— NO ————┐

│ YES                                              S213

S214                                    ┌──────────────────┐
┌──────────────────────────────┐        │ ABANDON          │
│ UPDATE CONTENTS OF CDT BY     │        │ REVOCATION LIST  │
│ COMMUNICATABLE APPARATUS      │        └──────────────────┘
└──────────────────────────────┘                │
        │                                        ↓
        │────────────────────────────────────→ (2)
        ↓

( END )

EP 0 930 556 A2

# F I G. 17

START OF PROCESSING
OF DVD PLAYER 1

EXECUTE AUTHENTICATION
PROCESSING WITH PERSONAL
COMPUTER 2 — S301

device_ID OF PERSONAL
COMPUTER 2 CORRESPONDS
TO DEVICE_ID WITH FLAG
ADDED THERETO IN CDT ? — S302

YES

NO

EXECUTE TRANSMISSION
PROCESSING OF KEY
AND CIPHER DATA — S304

DETERMINE THAT
PERSONAL COMPUTER 2
IS ILLEGAL APPARATUS — S303

PERSONAL COMPUTER 2
NEW APPARATUS ? — S305

NO

YES

ADD device_ID OF PERSONAL
COMPUTER 2 TO CDT — S306

END

# F I G. 18

(DVD PLAYER1)  (PERSONAL COMPUTER2)

source  sink

27 — | service_key & hash(F, G, H) |  | ID & license_key & hash(G, H) | — 50

S113 ← REQUEST FOR AUTHENTICATION, Nb  S111 PRODUCTION OF RANDOM NUMBER Nb
  S112

S114 → REQUEST FOR ID  S115

S117 ← ID  S116

S118 $Kv$ = Keyedhash $F(Kser, ID)$
S119 PRODUCTION OF $Na$

S120 → INQUIRY $Na$  S121
  S122
  $R$ = Keyedhash $H(Klic, Na \| Nb)$

S124 ← RESPONSE R
  S123

S125 $R$ = Keyedhash $H(Kv, Na \| Nb)$
CHECK, IF NOT SATISFIED, PROCESSING IS ENDED
S126 $Kab$ = Keyedhash $G(Kv, Na \| Nb)$
S127 PRODUCTION OF $Kc$
S128 $X$ = Enc $(Kab, Kc)$

S129 → X  S130
  $K'ab$ = Keyedhash $G(Klic, Na \| Nb)$
S132 PRODUTION OF $N'a$  S131
  $Kc$ = Dec $(K'ab, X)$

S133 → N' a  S134
  S136
S135 $sk$ = Keyedhash $H(Kc, N'a)$  $sk$ = Keyedhash $H(kc, N'a)$

EP 0 930 556 A2